# EUROPEAN PATENT APPLICATION

(11) **EP 2 571 007 A2**
(43) Date of publication of application: **20.03.2013**
(21) Application number: 12184961.6
(22) Date of filing: 19.09.2012
(51) Int. Cl.: G09B 15/00

(54) **Piano learning system for tablet and touchscreen devices**

(30) Priority: 19.09.2011 US 201161536096 P
(71) Applicant: ION Audio LLC, Cumberland, RI 02864 (US)
(72) Inventor: Mittelstadt, Wendy L., Lowell, MA 08152 (US); Morrissey, Daniel R., Foster, RI 02825 (US)
(74) Representative: Hofstetter, Schurack & Partner

(57) **Abstract**

A piano learning system for a touchscreen enabled device is disclosed. The system includes a housing configured and arranged to support a touchscreen enabled device. A keyboard on the housing has a plurality of selectably lightable keys. A communication interface is configured and arranged to connect to the touchscreen enabled device. A microprocessor is electrically connected to the keyboard and communication interface. The microprocessor is configured and arranged to read the state of the lightable keys and transmit the state through the communication interface and is further configured and arranged to selectively light the lightable keys of the keyboard in response to instructions received through the communication interface.

## Description

### BACKGROUND

### 1. Technical Field

The present patent document relates generally to electronic music instruments and more particularly to a piano learning system for tablet and touchscreen devices.

### 2. Background of the Related Art

Investing in formal weekly piano instruction and a traditional piano instrument is an expensive proposition. While many parents want their children to learn the age-old art of piano playing, they are unwilling to make this investment without assurance that the child will be interested, and make the commitment to the weekly practice needed.

Current piano instructional systems on the market for computers are not effective, because the laptop or personal computer monitor cannot be placed close enough to the piano keys.

Therefore, there is a perceived need in the industry for a piano learning system that is useable with modern touchscreen enabled devices, such as tablet computers that enables a student to learn visually as well as through hearing.

### SUMMARY

The present invention solves the problems of the prior art by providing a piano learning system for and tablet computer, such as the iPad, or other touchscreen-enabled devices such as iPhone, iPod touch, or other brand tablet computers and devices. Many people want to learn the basics of playing piano without investing in a piano or formal piano instruction. This system will be used by children, parents, adults, non-musicians and beginning musicians. This can also be used as a teacher's supplement in the traditional classroom, for practice at home.

The object of the invention is to teach non-musicians how to play piano quickly. With this invention people with no musical skill can play familiar melodies on the piano faster than with previous electronic teaching methods.

Also, by creating lesson content with one-on-one instructional videos, people can learn piano in the comfort of their own home, and not suffer the intimidation of learning in a classroom, or the intimidation of playing for a piano instructor.

Additionally, because the content is video based, the lessons can be paused and replayed again and again until mastered. In contrast, a weekly live piano lesson typically lasts one hour and there is no way to repeat the instruction after the teacher has left.

The cost advantage to the piano learning system of the present invention is that the keyboard is not burdened by the cost of expensive sound chips and/or modules. All the piano sounds come from the built-in audio capabilities of the tablet or touchscreen enabled device. The keyboard portion is a controller and does not make any sound on its own without the connection to a tablet or touchscreen enabled device. Consequently, the design of the piano learning system of the present invention is simple and manufacturing is cost lower.

### BRIEF DESCRIPTION OF THE DRAWINGS

These and other features, aspects, and advantages of the present invention will become better understood with reference to the following description, appended claims, and accompanying drawings where:
Fig. 1 is a perspective view of an embodiment of the piano learning system of the present invention; and
Fig. 2 is a schematic diagram of the operation of an embodiment of the piano learning system of the present invention.

### DESCRIPTION OF THE PREFERRED EMBODIMENT

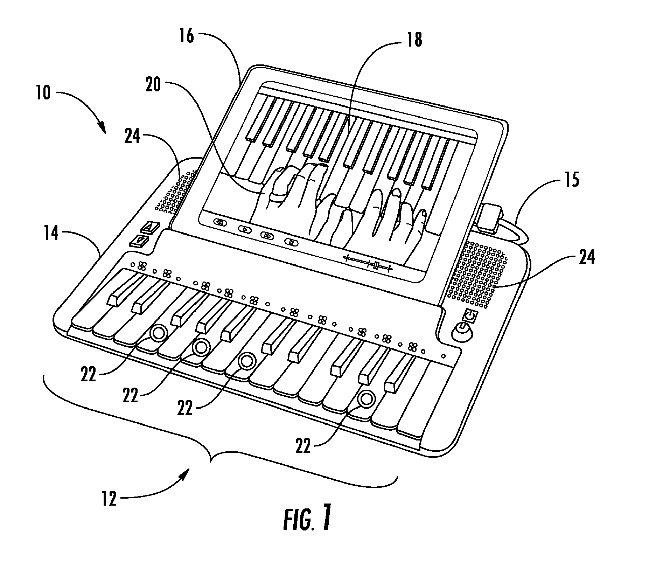

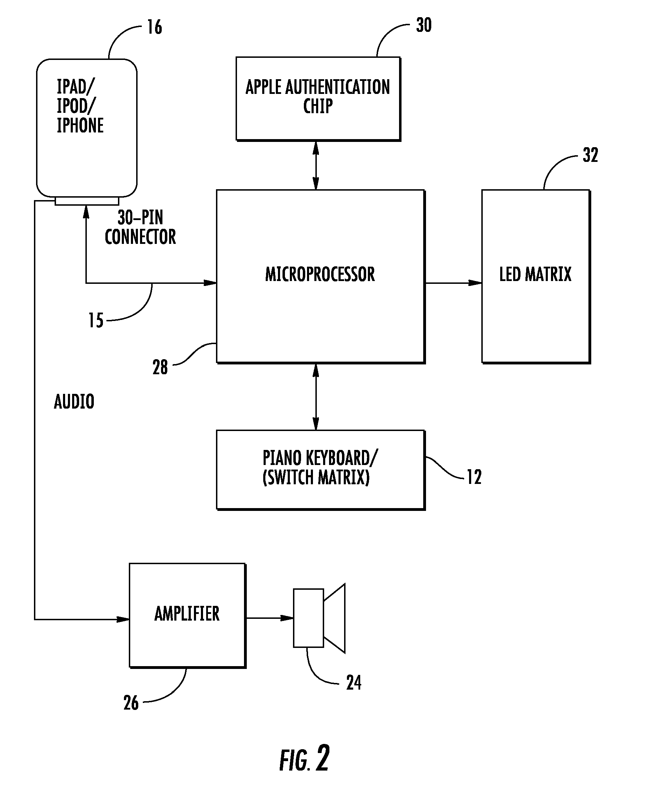

Referring now to Figs. 1 and 2, an embodiment of the piano learning system of the present invention is shown generally at 10. This system 10 includes a piano-style keyboard 12, preferably having 25 notes, that is mounted to a housing 14. Other numbers of keys may be included. The housing 14 includes a communication interface 15 to connect to the tablet or touchscreen enabled device 16, such as an iPad, iPod Touch or iPhone. On Apple brand touchscreen devices, the Apple 30-pin connector is used. For the convenience of the reader the term "tablet" will be used throughout, but it is to be understood that the term tablet includes other touchscreen enabled devices.

The tablet 16 is placed on the housing 14 just rear of the keyboard 12. By placing the tablet 16 directly behind the keyboard 12, the student does not have to look away from keyboard12 while also following instruction originating from the tablet 16.

A piano teaching application (or "app") is included and configured to run on the tablet 16. The user interface includes a replica of the keyboard 18 and a pair of instructor's hands 20 showing the student where to place their fingers on the keyboard 12. Preferably the app is configured to display the piano instructor's hands 20 on 1:1 scale to allow the student to easily follow the instruction. The instructor's hands 20 are videotaped on a keyboard with the same number of keys as the keyboard 12 on the piano learning system10. Alternatively, the hands 20 may be computer simulated. Additionally, the keys 12 in the piano learning system 10 light up, to further guide the student as to which notes to play.

The app includes any number of piano instruction lessons. The app transmits audio and MIDI data from the tablet16 over the communication interface 15 to the housing 12, which will be further elaborated below with reference to Fig. 2. The MIDI event data is synchronized with the video content displayed within the app, and is used for the purpose of lighting the keys (e.g. 22) of the keyboard 12 at the appropriate time and in the right sequence.

The housing 14 includes two speakers 24 included for amplifying the sound generated by the tablet. The speakers 24 may be amplified by an amplifier 26.

The key electrical components of the design are a microprocessor 28 that communicates with and can read the state of the keyboard keys 12 and properly authenticate the piano learning system 10 with the tablet 16.

For example, the microprocessor 28 can activate the piano learning system 10 with Apple brand devices through an authentication chip 30 via a serial interface (pins 12 and 13 on the Apple processor) and with the iPad/iPod/iPhone via a serial interface on the Apple 30-pin connector.

Regardless of whether authentication is required, the microprocessor 28 can read the state of the piano keyboard (which are basically switches). The method for a microprocessor28 to read switches is well established and not repeated here. The microprocessor 28 determines which note is being pressed and sends this information to the device through the communication interface 15 to the tablet 16 and app.

The communication protocol used is preferably Core MIDI, in which a note number, MIDI channel, and velocity are sent (but other protocols are possible). Similarly, the app on the tablet 16 is configured to send commands to the microprocessor28 to determine which lights on the keyboard 12 should light up. The microprocessor controls a bank of lights 32, preferably LEDs, under the keys 12 which can be individually addressed and lit up. The method for a microprocessor28 to control LEDs is well established and not repeated here.

As stated earlier, the audio simulating the keypresses on the keyboard keys 12 originates from the tablet 16. The audio may be either in analog or digital format. In one embodiment analog audio may be used. However, digital audio may also be used with the provision of including digital-to-analog audio converters, which is known in the art.

The audio can be sent to an external audio connector or to the onboard speakers 24 mentioned above (or both).

Therefore, the problem of providing a piano learning system that permits a student to easily follow the instructor visually is shown. Not only does the piano learning system of the present invention include lighted keys it also includes a visual representation of the instructor's hand's placement on the keyboard to further enhance and speed the student's learning.

It would be appreciated by those skilled in the art that various changes and modifications can be made to the illustrated embodiments without departing from the spirit of the present invention.

## Claims

1. A piano learning system for a touchscreen enabled device, comprising:
a housing configured and arranged to support a touchscreen enabled device;
a keyboard on the housing having a plurality of selectably lightable keys;
a communication interface configured and arranged to connect to the touchscreen enabled device;
a microprocessor electrically connected to the keyboard and communication interface, the microprocessor configured and arranged to read the state of the lightable keys and transmit the state through the communication interface and further configured and arranged to selectively light the lightable keys of the keyboard in response to instructions received through the communication interface.

2. The piano learning system of claim 1, further comprising an application configured and arranged to run on the touchscreen enabled device configured and arranged to receive the state of the lightable keys and further configured and arranged to generate and transmit instructions through the communication interface to selectively light the lightable keys of the keyboard.

3. The piano learning system of claim 2, wherein the application is further configured and arranged to display on the touchscreen enabled device a simulated keyboard and simulated hands on the keys of the keyboard.

4. The piano learning system of claim 2, wherein the application includes a number of prerecorded instructional videos configured and arranged to be displayed on the touchscreen enabled device.

5. The piano learning system of claim 3, wherein the application if further configured and arranged to selectively light the lightable keys corresponding to the position of the simulated hands on the simulated keys.

6. The piano learning system of claim 1, wherein the touchscreen enabled device is supported just rear of the keyboard.

7. The piano learning system of claim 1, wherein the touchscreen enabled device is a tablet computer.

8. The piano learning system of claim 1, further comprising at least one speaker in the housing configured and arranged to play audio from the touchscreen enabled device.

9. The piano learning system of claim 2, wherein the application is configured and arranged to transmit instructions to the communication interface in Core MIDI format.

10. The piano learning system of claim 1, wherein the microprocessor is configured and arranged to transmit instructions to the communication interface in Core MIDI format.

11. A piano learning system for a touchscreen enabled device, comprising:
a housing configured and arranged to support a touchscreen enabled device;
a keyboard on the housing having a plurality of selectably lightable keys;
a communication interface configured and arranged to connect to the touchscreen enabled device;
a microprocessor electrically connected to the keyboard and communication interface, the microprocessor configured and arranged to read the state of the lightable keys and transmit the state through the communication interface and further configured and arranged to selectively light the lightable keys of the keyboard in response to instructions received through the communication interface; and
an application configured and arranged to run on the touchscreen enabled device configured and arranged to receive the state of the lightable keys and further configured and arranged to generate and transmit instructions through the communication interface to selectively light the lightable keys of the keyboard;
the application is further configured and arranged to display on the touchscreen enabled device a simulated keyboard and simulated hands on the keys of the keyboard indicating finger position on the keys;
whereby the application sends instructions to selectively light the lightable keys corresponding to the position of the simulated hands on the simulated keys.

12. The piano learning system of claim 11, wherein the application includes a number of prerecorded instructional videos configured and arranged to be displayed on the touchscreen enabled device.

13. The piano learning system of claim 11, wherein the touchscreen enabled device is supported just rear of the keyboard or wherein the touchscreen enabled device is a tablet computer..

14. The piano learning system of claim 11, further comprising at least one speaker in the housing configured and arranged to play audio from the touchscreen enabled device.

15. The piano learning system of claim 12, wherein the application or the microprocessor is configured and arranged to transmit instructions to the communication interface in Core MIDI format.
